# EUROPÄISCHE PATENTANMELDUNG

(11) **EP 0 978 523 A1**
(43) Veröffentlichungstag der Anmeldung: **09.02.2000**
(21) Anmeldenummer: 99115296.8
(22) Anmeldetag: 03.08.1999
(51) Int. Cl.: C08G 18/40, C08G 18/73, C08G 18/75, C08G 18/08

(54) **Verfahren zur Herstellung von kompakten, transparenten Polyisocyanat-Polyadditionsprodukten**

(30) Priorität: 04.08.1998 DE 19835113
(71) Anmelder: BASF AKTIENGESELLSCHAFT, 67056 Ludwigshafen (DE)
(72) Erfinder: Maletzko, Christian, Dr., 67122 Altrip (DE); Baumann, Edwin, 67105 Schifferstadt (DE)

(57) **Zusammenfassung**

Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder zusatzstoffen, dadurch gekennzeichnet, daß man die Umsetzung von (a) mit (b) in einer Form unter einem Druck von 1 bis 20 MPa durchführt.

## Beschreibung

Die Erfindung betrifft Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren und/oder (d) Hilfs- und/oder Zusatzstoffen. Des weiteren bezieht sich die Erfindung auf kompakte, transparente Polyisocyanat-Polyadditionsprodukte, die nach diesem Verfahren herstellbar sind, und auf deren Verwendung.

Kompakte Polyisocyanat-Polyadditionsprodukte, im Folgende auch als Produkte bezeichnet, und deren Herstellung sind allgemein bekannt und in der Fachliteratur vielfältig beschrieben. Diese Produkte finden zunehmend Verwendung in Märkten, in denen üblicherweise Glas verwendet wird, beispielsweise als Scheiben oder Leuchtkörperabdeckungen im Immobilien-, Automobil- oder Flugzeugbau. Die Kunststoffe weisen gegenüber Glas als Vorteil insbesondere eine niedrigere Dichte und eine geringere Sprödigkeit auf, womit Treibstoff eingespart und die Splitterbildung bei Unfällen verringert werden kann. So beschreibt die WO 96/23827 kompakte, transparente Polyurethane zur Herstellung von Scheiben für Immobilien, Automobile oder Flugzeuge. Die Produkte gemäß WO 96/23827 werden durch Umsetzung von cycloaliphatischen Isocyanaten mit difunktionellen Polyolen zu einem NCO-terminierten Prepolymer und anschließender Reaktion des Prepolymers mit einem Diamin hergestellt. Nachteilig an diesen Produkten wirkt sich deren relativ geringe Härte von 80-81 Shore-Härte D und ihr großer Wärmeausdehnungskoeffizient aus.

Die Oberfläche derartig erhältlicher Produkte ist insbesondere für den Einsatz als Glasersatz im Automobilbau ungenügend, da aufgrund der Abbildung von Unebenheiten üblicher Formwerkzeugoberflächen, Riefen und gegebenenfalls inhomogenen Produkten einfallendes Licht zu stark gestreut und eine Sicht durch diese Produkte beeinträchtigt wird. Eine Strukturierung der Oberfläche oder ein Umformen der Produkte nach der vollständigen Umsetzung der Ausgangskomponenten ist kaum möglich, da die duromeren, d.h. nicht thermoplastischen Produkte ohne eine Schädigung ihrer Struktur kaum thermisch erweicht oder geschmolzen werden können. Als Oberfläche oder innere Oberfläche wird im Folgenden die Oberfläche der Form bezeichnet, die bei der Herstellung der Produkte mit diesen im Kontakt steht und die Form und die Oberflächenbeschaffenheit der Produkte vorgibt.

Zudem weisen die bekannten Produkte eine zu geringe Härte und einen zu großen Wärmeausdehnungskoeffizient auf. Gerade eine hohe Härte und ein geringer Wärmeausdehnungskoeffizient sind aber insbesondere in Automobil- und Flugzeugbau gewünscht, um beispielsweise ein Verkratzen der Produkte zu vermeiden.

Der vorliegenden Erfindung lag daher die Aufgabe zugrunde, ein Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder Zusatzstoffen zu entwickeln, nach dem Produkte herstellbar sind, die eine qualitativ hochwertige, d.h. definierte Oberfläche aufweisen. Insbesondere sollten Produkte, die aufgrund ihrer sehr glatten Oberfläche hervorragend zum Ersatz von Glas geeignet sind, entwickelt werden. Zudem wäre es wünschenswert, wenn diese Produkte eine große Härte und einen niedrigen Wärmeausdehnungskoeffizienten aufwiesen. Eine weitere Aufgabe bestand darin, Verfahren zur Herstellung von transparenten Beschichtungen zu entwickeln, die durch einfache Durchführung und weniger Verfahrensschritte gekennzeichnet sind.

Diese Aufgabe wurde erfindungsgemäß dadurch gelöst, daß man die Umsetzung von (a) mit (b) gegebenenfalls in Gegenwart von (c) Katalysatoren und/oder (d) Hilfs- und/oder Zusatzstoffen in einer Form unter einem Druck von 1 bis 20 MPa, bevorzugt 5 bis 20 MPa durchführt.

Durch die Pressung der erfindungsgemäßen Produkte bei hohen Drücken wird erreicht, daß insbesondere Inhomogenitäten, beispielsweise durch Luftblasen, in den Produkten beseitigt werden. Durch die Verwendung von Preßwerkzeugen mit einer sehr glatten oder definiert strukturierten inneren Oberfläche können somit erfindungsgemäß Produkte erhalten werden, die aufgrund ihrer qualitativ hochwertigen Oberfläche beispielsweise als Scheiben im Automobilbau eingesetzt werden können.

Bevorzugt führt man die Pressung bei einer Temperatur von 20 bis 220°C durch.

Besonders bevorzugt kann man derart verfahren, daß man in einem ersten Schritt (i) (a) mit (b) gegebenenfalls in Gegenwart von (c) Katalysatoren und/oder (d) Hilfs- und/oder Zusatzstoffen in einer Form bei einer Formtemperatur von 20 bis 140°C, bevorzugt 40 bis 120°C, besonders bevorzugt 50 bis 100°C, für eine Dauer von 0,5 bis 15 min, bevorzugt 1 bis 5 min, umsetzt und anschließend in einem weiteren Schritt (ii) das teilweise umgesetzte Produkt in der gleichen oder bevorzugt einer anderen Form bei einer Formtemperatur von 100 bis 220 °C unter einem Druck von 1 bis 20 MPa formgebend preßt. Aufgrund der vergleichsweise kurzen Reaktionszeit und der bevorzugt niedrigen Temperatur des ersten Schrittes wird dabei ein Produkt in den zweiten Verfahrensschritt (ii) eingeführt, in dem die Ausgangskomponenten (a) und (b) noch nicht vollständig ausreagiert sind und das Produkt deshalb noch plastisch verformbar vorliegt. Die so hergestellten Rohlinge des Verfahrensschrittes (i) weisen, aufgrund der Abbildung von Unebenheiten der Formwerkzeugoberfläche wie Schleifspuren und Riefen, eine mehr oder weniger starke oberflächliche Lichtstreuung auf. Üblicherweise werden die so hergestellten Formkörper nachgetempert, um das endgültige Eigenschaftsniveau zu erreichen. Beim erfindungsgemäßen Verfahren werden die Rohlinge bevorzugt nicht zusätzlich getempert, sondern in dem Verfahrensschritt (ii) weiterverarbeitet. Das Produkt des Verfahrensschrittes (i) kann gegebenenfalls vor der vollständigen Umsetzung in (ii) bei Temperaturen von <35°C über eine längere Zeit, beispielsweise für einige Wochen, gelagert werden. Falls das Produkt des Schrittes (i) nicht sofort in dem Schritt (ii) weiterverarbeitet wird und dadurch abkühlt, hat es sich als vorteilhaft erwiesen, das Produkt vor dem Einbringen in die Form des Verfahrensschrittes (ii) beispielsweise mit Infrarot-Strahlern oder in Wärmeschränken auf eine Temperatur von 40 bis 140°C, bevorzugt 80 bis 130°C, zu erwärmen. Bevorzugt kann das Produkt des zweiten Verfahrensschrittes (ii) in der Preßform auf eine Temperatur von 20 bis 50°C, üblicherweise innerhalb von 1 bis 5 min, abgekühlt werden.

Der Verfahrensschritt (i) kann beispielsweise in einer üblichen, bevorzugt temperierbaren und verschließbaren, Form durchgeführt werden. An die Oberflächenqualität dieser Form werden keine besonderen Anforderungen gestellt. Insbesondere muß die Oberfläche nicht poliert oder anderweitig auf eine geringe Rauhigkeit hin bearbeitet sein. Insbesondere bei der Herstellung von möglichst glatten Produkten werden als Formwerkzeuge, in denen der erfindungsgemäße Preßvorgang durchgeführt wird, beispielsweise der bereits beschriebene Schritt (ii), bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Form kann beispielsweise durch Polieren behandelt werden. Die bevorzugte Ausführungsform des erfindungsgemäßen Verfahrens in den zwei Schritten (i) und (ii) bietet insbesondere die Vorteile, daß Formwerkzeuge mit einer besonders glatten Oberfläche und Einrichtungen zum Pressen der Produkte nicht für die anfängliche Umsetzung der Ausgangskomponenten eingesetzt werden müssen. Dieser Schritt (i) kann mit üblichen Formwerkzeugen durchgeführt werden, womit erhebliche Investitionen in Werkzeugen gespart werden können. Zudem wird ein Temperungsschritt des Produktes, der üblicherweise nach der Herstellung in der Form erfolgt, überflüssig.

Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und insbesondere zur Durchführung des erfindungsgemäßen Preßvorganges mit geeigneten Einrichtungen zur Ausübung des erfindungsgemäßen Druckes auf das Produkt ausgerüstet sein.

Der erfindungsgemäße Druck von 1 bis 20 MPa in dem erfindungsgemäßen Verfahren wird bevorzugt für eine Dauer von 0,5 bis 30 min, besonders bevorzugt 1 bis 10 min aufrechterhalten.

Mit der Beschaffenheit der Oberfläche und Form des Werkzeugs wird die Oberfläche des Produktes festgelegt. Neben geprägten sind insbesondere auch hochbrillante, glatte Oberflächen durch das erfindungsgemäße Verfahren zugänglich. Dadurch sind Formkörper herstellbar, die als transparente Verglasungen dienen können. Je nach angewandtem Preßdruck werden kleinere Luftblasen im Rohling, die bei anderen Verfahren zu Ausschußmaterial führen würden, weggepreßt, so daß einwandfreie Produkte durch den erfindungsgemäßen Preßvorgang zugänglich sind. Die Ausschußrate kann somit durch das erfindungsgemäße Verfahren gesenkt werden.

Die nach dem erfindungsgemäßen Verfahren erhältlichen kompakten, d.h. nicht geschäumten, transparenten Polyisocyanat-Polyadditionsprodukte weisen bevorzugt bei einer Dicke von 3 bis 5 mm eine Lichtdurchlässigkeit von mehr als 90 % und einen Streulichtanteil von weniger als 3 % auf und können bevorzugt als Glasersatz verwendet werden, beispielsweise als Sonnendächer, Front-, Heck-, Seitenscheiben im Automobil- oder Flugzeugbau und/ oder als Leuchtkörperabdeckungen, beispielsweise als Front- oder Heckleuchten im Flugzeug oder Automobilbau. Insbesondere beim Einsatz der im Folgenden beschriebenen, bevorzugten Ausgangskomponenten weisen die Produkte, beispielsweise die Sonnendächer, Front-, Heck-, Seitenscheiben im Automobil- oder Flugzeugbau oder Leuchtkörperabdeckungen, eine hohe Härte und geringe Sprödigkeit sowie einen verringerten Wärmeausdehnungskoeffizienten auf.

Die Ausgangskomponenten zur Herstellung der erfindungsgemäßen Produkte sollen im Folgenden beispielhaft beschrieben werden:

Als Isocyanate (a) kommen die an sich bekannten aromatischen, araliphatischen, aliphatischen und/oder cycloaliphatischen organischen Isocyanate, bevorzugt Diisocyanate in Frage.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI) und/oder Hexamethylendiisocyanat-1,6 (HDI); cycloaliphatische Diisocyanate wie Cyclohexan-1,3- und 1,4-diisocyanat sowie beliebige Gemische dieser Isomeren, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische und/oder 1-Isocyanato-3,3,5-trimethyl-5-isocyanatomethylcyclohexan (IPDI). Des weiteren sind als Isocyanate (a) beispielhaft zu nennen: 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylen-polyisocyanate, Mischungen aus 4,4'-, 2,4'- und 2,2'-Diphenylmethandiisocyanaten und Polyphenylpolymethylen-polyisocyanaten (Roh-MDI) und Mischungen aus Roh-MDI und Toluylendiisocyanaten. Außerdem können Mischungen enthaltend mindestens zwei der genannten Isocyanate als (a) eingesetzt werden.

Des weiteren können modifizierte Isocyanate mit Isocyanurat-, Biuret-, Ester-, Harnstoff-, Allophanat-, Carbodiimid-, Uretdion- und/oder Urethangruppen, letztere im Folgenden auch als Urethangruppen-modifiziert bezeichnet, enthaltende Di- und/oder Polyisocyanate in dem erfindungsgemäßen Verfahren eingesetzt werden. Im einzelnen kommen beispielsweise in Betracht: Urethangruppen enthaltende organische Polyisocyanate mit NCO-Gehalten von 50 bis 10 Gew.-%, vorzugsweise von 35 bis 15 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den beschriebenen Polyester- und/ oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.

Als modifizierte Isocyanate setzt man bevorzugt isocyanuratisierte, biuretisierte und/oder Urethangruppen-modifizierte aliphatische und/oder cycloaliphatische Diisocyanate, beispielsweise die bereits genannten, ein, die nach allgemein bekannten Verfahren biuretisiert und/oder cyanuratisiert worden sein können und mindestens eine, bevorzugt mindestens zwei freie Isocyanatgruppen aufweisen, besonders bevorzugt drei freie Isocyanatgruppen aufweisen. Die Trimerisierung der Isocyanate zur Herstellung der Isocyanate mit Isocyanuratstruktur kann bei üblichen Temperaturen in Gegenwart bekannter Katalysatoren, beispielsweise Phosphinen und/oder Phosphinderivaten, Aminen, Alkalisalzen, Metallverbindungen und/oder Mannichbasen erfolgen. Trimerisierte Isocyanate enthaltend Isocyanuratstrukturen sind zudem kommerziell erhältlich. Isocyanate mit Biuretstrukturen können nach allgemein bekannten Verfahren beispielsweise durch Reaktion von den genannten Diisocyanaten mit Wasser oder beispielsweise Diaminen hergestellt werden, wobei als Zwischenprodukte ein Harnstoffderivat gebildet wird. Auch biuretisierte Isocyanate sind kommerziell erhältlich.

Besonders bevorzugt werden als (a) Isocyanate aliphatische und/oder cycloaliphatische Diisocyanate, insbesondere Hexamethylen-1,6-diisocyanat, die Isomeren des Dicyclohexylmethandiisocyanats und/oder l-Isocyanato-3,3,5-trimethyl-5-isocyanatomethylcyclohexan, die gegebenenfalls isocyanuratisiert, biuretisiert und/oder Urethangruppen-modifiziert sein können, eingesetzt.

Die aliphatischen und/oder cycloaliphatischen Isocyanate bieten den Vorteil, daß die mit diesen Isocyanaten hergestellten Produkte eine verbesserte Lichtechtheit und eine geringere Eigenfarbe aufweisen.

Als gegenüber Isocyanaten reaktive Verbindungen (b) können in dem erfindungsgemäßen Verfahren übliche Substanzen, beispielsweise mit einem Molekulargewicht von 60 bis 10000 eingesetzt werden, beispielsweise bekannte Polyetherpolyalkohole, Polyesterpolyalkohole, Polyetherpolyesterpolyalkohole, Polythioether-polyole, polymermodifizierte Polyetherpolyole, Pfropfpolyetherpolyole, insbesondere solche auf Styrol- und/oder Acrylnitrilbasis, Polyetherpolyamine, hydroxylgruppenhaltigen Polyacetale und/oder hydroxylgruppenhaltigen aliphatischen Polycarbonate, die nach allgemein bekannten Verfahren hergestellt werden können und üblicherweise ein Molekulargewicht von 400 bis 8000 aufweisen.

Als Polyetherpolyalkohole können allgemein bekannte Verbindungen eingesetzt werden, die nach bekannten Verfahren hergestellt werden, beispielsweise durch Alkoxylierung von Startersubstanzen mit Alkylenoxiden. Die Herstellung kann als anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder als kationische Polymerisation mit Lewis-Säuren, wie Antimonpentachlorid, Borfluorid-Etherat u.a. oder Bleicherde, als Katalysatoren mit einem oder mehreren Alkylenoxiden mit 2 bis 4 Kohlenstoffatomen im Alkylenrest durchgeführt werden.

Üblicherweise wird nach der Synthese der Katalysator durch Säureneutralisation, Destillation und Filtration entfernt. Als Säuren werden vor allem die beiden anorganischen Säuren Salzsäure und/ oder Phosphorsäure wegen der genauen Steuerung des Äquivalenzpunktes und der technologisch einfachen Entfernung von eventuellen Säureüberschüssen verwendet.

Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak sowie mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Bevorzugt werden als Polyetherpolyalkohole Anlagerungsprodukte von Ethylenoxid und/oder Propylenoxid an Glycerin, Trimethylolpropan, Ethylendiamin und/oder Pentaerythrit einzeln oder in Mischungen eingesetzt.

Als Polyesterpolyalkohole können allgemein bekannte Verbindungen eingesetzt werden, die nach bekannten Verfahren hergestellt werden können. Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei-und mehrwertige Alkohole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, 1,12-Dodecandiol, Glycerin und/oder Trimethylolpropan. Vorzugsweise verwendet werden Ethandiol, Diethylenglykol, 1,4-Butandiol, 1,5-Pentandiol, 1,6-Hexandiol, Glycerin und/oder Trimethylolpropan. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.

Die erhaltenen Polyesterpolyole besitzen vorzugsweise eine Funktionalität von 2 bis 4, insbesondere 2 bis 3, und ein Hydroxylzahl von bevorzugt 20 bis 200 mg KOH/g.

Des weiteren können als gegenüber Isocyanaten reaktive Verbindungen (b) Diole, Triole und/oder Polyole mit Molekulargewichten von 60 bis <400 eingesetzt werden, beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Bevorzugt setzt man zur Herstellung der kompakten, transparenten Polyisocyanat-Polyadditionsprodukte als (b) eine Mischung ein, die eine mittlere Funktionalität von ≥3 und eine mittlere Hydroxylzahl von 300 bis 950 mg KOH/g aufweist, insbesondere ein solche Mischung, die die folgenden Komponenten enthält:
- 45 bis 99 Gew.-%: einer Mischung (I) enthaltend mindestens ein Polyetherpolyalkohol, wobei die Mischung (I) eine mittlere Funktionalität von mindestens 3, bevorzugt 3,1 bis 6, und eine mittlere Hydroxylzahl von 650 bis 950, bevorzugt 700 bis 940 mg KOH/g aufweist,
- 1 bis 55 Gew.-%: einer Mischung (II) enthaltend mindestens ein Polyesterpolyalkohol,wobei die Mischung (II) eine mittlere Funktionalität von 2 bis 3 und eine mittlere Hydroxylzahl von 20 bis 200 mg KOH/g aufweist.

Der Ausdruck Mischung, wie er in dieser Schrift verwendet wird, bedeutet nicht, daß die darin enthaltenen Verbindungen notwendig als Mischung mit den Isocyanaten in Kontakt gebracht wird, sondern wird lediglich zur Definition der Menge benutzt, die die erfindungsgemäßen mittleren Funktionalitäten und Hydroxylzahlen aufweisen soll.

Als Katalysatoren (c) zur Herstellung der Produkte können gegebenenfalls allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen (b), verwendet wird.

Im Folgenden seien mögliche Katalysatoren (c) beispielhaft genannt: tertiäre Amine, beispielsweise Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,8-Diazabicyclo(5.4.0)undecen-7, 1,2-Dimethylimidazol, l-Azabicyclo-(2,2,0)-octan, 1,4-Diazabicyclo-(2,2,2)-octan(Dabco), Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, bevorzugt Triethylendiamin, Pentamethylendiethylentriamin und/oder Bis(dimethylamino)ether; Metallsalze, beispielsweise anorganische und/ oder organische Verbindungen des Eisens, Bleis, Zinks, und/oder Zinns in üblichen Oxidationsstufen des Metalls, beispielsweise Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid.
Besonders bevorzugt werden als (c) Dibutylzinndilaurat, Zinndioctoat und/oder Dibutyldilaurylzinnmercaptid; Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Die beispielhaft genannten Katalysatoren (c) können einzeln oder in Mischungen enthaltend mindestens zwei der genannten Katalysatoren eingesetzt werden.

Als Hilfs- und/oder Zusatzstoffe (d) können gegebenenfalls übliche Substanzen in dem erfindungsgemäßen Verfahren verwendet werden. Genannt seien beispielsweise oberflächenaktive Substanzen, interne Trennmittel (IMR), Füllstoffe, Farbstoffe, Pigmente, Flammschutzmittel, Hydrolyseschutzmittel, fungistatische und bakteriostatisch wirkende Substanzen sowie UV-Stabilisatoren und Antioxidantien, soweit diese die Transparenz der Produkte nicht beeinträchtigen. Dies kann anhand einfacher Routineexperimente ermittelt werden. Möglich ist auch der Einsatz von Pigmenten und/oder Farbstoffen, um getönte/farbige Formkörper zu erhalten.

Insbesondere der Einsatz von Antioxidantien und UV-Schutzmitteln in dem erfindungsgemäßen Verfahren kann für viele Anwendungsgebiete der erfindungsgemäßen, transparenten Polyisocyanat-Polyadditionsprodukte von Vorteil sein, da durch Zusatz dieser Stoffe ein Vergilben, Verfärben oder Verspröden der Produkte verhindert werden kann. Als UV-Stabilisatoren können beispielsweise die in der EP-A 712 887 auf der Seite 4, Zeilen 10 bis 20, genannten Verbindungen eingesetzt werden.

Als Antioxidantien können beispielsweise die in EP-A 712 887, Seite 4, Zeilen 21 bis 28, beschriebenen Substanzen verwendet werden.

Geeignete Pigmente sind beispielsweise ebenfalls in EP-A 712 887 auf der Seite 4, Zeilen 29 bis 37 offenbart.

Zur Herstellung der erfindungsgemäßen Produkte können die Isocyanate (a) und die gegenüber Isocyanaten reaktiven Verbindungen (b) in solchen Mengen zur Umsetzung gebracht, daß das Äquivalenzverhältnis von NCO-Gruppen von (a) zur Summe der reaktiven Wasserstoffatome von (b) bevorzugt 0,95 bis 1,3:1, besonders bevorzugt 1 bis 1,2:1 und insbesondere 1 bis 1,15:1, beträgt. Falls die Polyurethanformkörper zumindest teilweise Isocyanuratgruppen gebunden enthalten, wird üblicherweise ein Verhältnis von NCO-Gruppen zur Summe der reaktiven Wasserstoffatome von 1,5 bis 60:1, vorzugsweise 1,5 bis 8:1, angewandt.

Die Umsetzung erfolgt bevorzugt unter möglichst vollständiger Abwesenheit, besonders bevorzugt vollständiger Abwesenheit, von Wasser.

Die Produkte werden üblicherweise nach dem bekannten one-shot oder dem ebenfalls bekannten Prepolymerverfahren hergestellt.

Bei dem bekannten Prepolymerverfahren wird in einem ersten Schritt üblicherweise aus (a) und im Unterschuß (b) ein Isocyanatgruppen-aufweisendes Prepolymer hergestellt, das anschließend mit weiterem (b) zu den gewünschten Produkten umgesetzt wird. Das Prepolymerverfahren zeigte in dem erfindungsgemäßen Verfahren den Vorteil, daß der Schrumpf bei der Herstellung des Produktes reduziert werden konnte.

Bei dem one-shot Verfahren erfolgt die Umsetzung der Komponenten (a), (b) und gegebenenfalls (c) und/oder (d) zum Produkt in einem Schritt. Dabei hat es sich vorteilhaft erwiesen, nach dem Zweikomponentenverfahren zu arbeiten und die Komponenten (b) und gegebenenfalls die Katalysatoren (c) und/oder Hilfs- und/oder Zusatzstoffe (d) in der Komponente (A) zu vereinigen und als Komponente (B) die Isocyanate (a) zu verwenden.

Die in den Mischungen (I) und (II) enthaltenen gegenüber Isocyanaten reaktiven Verbindungen können einzeln zu dem Reaktionsgemisch zudosiert werden, als auch bevorzugt, wie beispielsweise im Zweikomponentenverfahren, in einer Mischung.

Die Umsetzung zum Produkt kann wie bereits beschrieben, beispielsweise durch Handguß, durch Hochdruck- oder Niederdruckmaschinen, oder durch RIM-Verfahren (reaction-injection-molding) in Formwerkzeugen durchgeführt werden. Geeignete PU-Verarbeitungsmaschinen sind handelsüblich erhältlich (Z.B. Fa. Elastogran, Isotherm, Hennecke, Kraus Maffei u.a.). Als vorteilhaft hat es sich erwiesen, wenn die Komponenten vor der Verarbeitung durch Anlegen von Vakuum (1-759 Torr) entgast werden, um blasenfreie Formteile zu erhalten. Bei der Verarbeitung mit PU-Maschinen ist es auch vorteilhaft, wenn während der Verarbeitung die Vorlagebehälter unter vermindertem Druck stehen.

Die Ausgangskomponenten werden üblicherweise in Abhängigkeit vom Anwendungsfall bei einer Temperatur von 0 bis 100°C, vorzugsweise von 20 bis 80°C, gemischt und in das geschlossene Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen.

Es ist auch möglich, mit dem erfindungsgemäßen Verfahren transparente Deckschichten, bzw. Beschichtungen, die üblicherweise eine Dicke von 0,1 bis 3 mm aufweisen, herzustellen. Diese Deckschichten, die beispielsweise die Aufgabe eines in mehreren Schichten aufgetragenen Klarlackes, z.B. zum Schutz von Oberflächen, beispielsweise von Teilen des Armaturenbrettes, übernehmen können, werden entsprechend den obigen Ausführungen in one-shot- oder im Prepolymerverfahren hergestellt.

Die Herstellung der Deckschichten bzw. Beschichtungen kann derart erfolgen, daß man die Umsetzung der Ausgangskomponenten zur Herstellung der transparenten Polyisocyanat-Polyadditionsprodukten in der Form auf einem zu beschichtenden Material, beispielsweise Holz oder Holzfurnier, Papier, Kunststoffen oder Metallen, die gegebenenfalls bereits beschichtet oder anderweitig bearbeitet, beispielsweise geätzt sein können, durchführt. Beispielsweise kann man die zu beschichtenden Materialien in eine Form legen, auf das Material die Komponenten (a), (b) und gegebenenfalls (c) und/oder (d) füllen, bevorzugt die Form schließen und erfindungsgemäß die Komponenten umsetzen. Bevorzugt kann es sich bei den zu beschichtenden Materialien um flächige Gegenstände, beispielsweise Folien, Papier, Metallbleche oder dünne Holzschichten mit Dicken von 0,1 bis 3 mm handeln. Die beschichteten Gegenstände können beispielsweise als Zierelemente, beispielsweise Holz- oder Holzimitatgegenstände oder Verkleidungen im Fahrzeugbau, beispielsweise am Armaturenbrett oder den Innenverkleidungen, eingesetzt werden. Die erfindungsgemäße Beschichtung weist gegenüber den bekannten Verfahren, die üblicherweise durch eine Vielzahl von Lackier- und Schleifvorgängen gekennzeichnet sind, erhebliche Vorteile auf. So ist es erfindungsgemäß möglich, in einem Vorgang ein Fertigteil herzustellen, ohne Einbußen in der Optik oder der Qualität hinnehmen zu müssen. Die Lackier- und Schleifprozesse werden erfindungsgemäß überflüssig oder minimiert.

Die nach dem erfindungsgemäßen Verfahren hergestellten Produkte weisen üblicherweise eine Dichte von 0,95 bis 1,20g/cm³ auf.

Die durch das erfindungsgemäße Verfahren erhältlichen kompakten, transparenten Polyisocyanat-Polyadditionsprodukte können bevorzugt als Glasersatz verwendet, beispielsweise als Sonnendächer, Front-, Heck-, Seitenscheiben im Automobil- oder Flugzeugbau und/ oder als Leuchtkörperabdeckungen, beispielsweise als Front- oder Heckleuchten im Flugzeug oder Automobilbau, eingesetzt werden.

Die Sonnendächer, Front-, Heck-, Seitenscheiben im Automobil- oder Flugzeugbau oder Leuchtkörperabdeckungen enthaltend die erfindungsgemäßen kompakten, transparenten Polyisocyanat-Polyadditionsprodukte weisen eine hohe Härte und geringe Sprödigkeit sowie einen verringerten Wärmeausdehnungskoeffizienten auf.

Die Erfindung wird in dem nachfolgenden Ausführungsbeispiel näher erläutert.

Die Ausgangskomponenten zur Herstellung der erfindungsgemäßen kompakten, transparenten Polyisocyanat-Polyadditionsprodukte sowie die eingesetzten Mengen sind nachfolgend dargestellt.
- Polyol A:: Polyetherpolyalkohol mit einer Hydroxylzahl von 875 mg KOH/g hergestellt durch Umsetzung von Trimethylolpropan mit Propylenoxid;
- Polyol B:: Polyetherpolyalkohol mit einer Hydroxylzahl von 770 mg KOH/g hergestellt durch Umsetzung von Ethylendiamin mit Propylenoxid;
- Polyol C:: Polyesterpolyalkohol mit einer mittleren Funktionalität von 2,7 und OHZ von 60 mg KOH/g auf der Basis Adipinsäure, Diethylenglykol und Trimethylolpropan;
- Kat. A:: Zinn-Katalysator (Formrez UL 32, Firma Witco);
- Kat. B:: 1,8-Diazabicylo(5.4.0)undecen-7 (Polycat DBU, Firma Air Products);
- NCO A:: Isocyanat A: IPDI, NCO-Gehalt 37,8 %.

### Beispiel 1

Das Isocyanat-Prepolymer wurde hergestellt durch Umsetzung von 200 g Isocyanat (NCO) A mit 30 g Polyol A bei 80°C, wobei das Polyol über eine Dauer von 1 Stunde zum vorgelegten Isocyanat zugetropft wurde. Nach der Zugabe wurde die Umsetzung für 2 Stunden bei der gleichen Temperatur vervollständigt. Um die Vollständige Umsetzung des Prepolymeren sicher zu stellen und zu beschleunigen, kann die Anwesenheit von Katalysatoren bei der Herstellung günstig sein. Beispielsweise haben sich 0,001 bis 0,1 Gew.% Katalysator in dem Isocyanat, bezogen auf das Gewicht des Isocyanates, bewährt. Diese Katalysatormenge bezieht sich auf die Prepolymerherstellung und kann zusätzlich zu den bereits beschriebenen Katalysatormengen eingesetzt werden. Entsprechende Katalysatoren sind eingangs beschrieben worden.

Anschließend wurden 209 g des Prepolymeren mit einer Mischung aus 50 g Polyol A, 25 g Polyol B, 25 g Polyol C, 1,0 g Katalysator (Kat) A und 1,25 g Katalysator (Kat) B mit einer Hochdruckmaschine nach dem RIM-Verfahren in eine geschlossene Plattenform, die eine Temperatur von 100°C aufwies, eingespritzt. Die Komponenten waren bei diesem Vorgang auf eine Temperatur von 60°C temperiert. Die Umsetzung in der Form wurde für eine Dauer von 3 Minuten durchgeführt.

Die so hergestellten transparenten Produkte wurden danach unter den in der Tabelle 1 dargestellten Bedingungen verpreßt und wiesen die aufgeführten Eigenschaften auf. Als Vergleich wurde ein Formkörper mit den gleichen Ausgangsstoffen und Umsatzbedingungen hergestellt, der allerdings nicht erfindungsgemäß verpreßt, sondern in bekannter Art getempert wurde.

**Tabelle 1**

| Beispiel | 1 | Vergleich |
|---|---|---|
| Preßbedingungen | | |
| Rohlingtemperatur [°C] | 130 | --- |
| Pressentemperatur [°C] | 160 | --- |
| Preßdruck [MPa] | 12 | --- |
| Preß zeit [min] | 5 | --- |
| Kühlzeit [min] | 2,5 | --- |

| Eigenschaften | | |
|---|---|---|
| Durchlicht [%] | 93,6 | 62,1 |
| Streulicht [%] | 2,1 | 10,9 |
| Tg aus DSC [°C] | 125 | 83 |
| Tg getempert aus DSC [°C]* | --- | 118 |

| | | |
|---|---|---|
| *: 1h bei 120°C getempert Tg: Glasübergangstenmperatur | | |

Die Glasübergangstemperatur wurde mittels DSC (Differential Scanning Calorimetrie) bestimmt. Diese Glasübergangstemperatur gibt an, bei welcher Temperatur ein amorphes Material beweglich wird, also erweicht. Die gepressten Produkte weisen, wie anhand der hohen Glasübergangstemperaturen ersichtlich, somit eine besonders gute Wärmestandfestigkeit auf, auch wenn sie nicht eigens zur Vervollständigung der chemischen Umsetzung getempert wurden. Die erfindungsgemäßen Produkte wiesen erwünscht hohe Härte auf. Der Vergleich der optischen Eigenschaften, wie Lichtdurchlässigkeit und der geringe Streulichtanteil, zeigt die deutliche Verbesserung dieser Eigenschaften, die durch den Preßvorgang erzielt wird. Die Transparenz konnte durch den erfindungsgemäßen Preßvorgang deutlich erhöht werden, wie anhand des um ca. 50 % verbesserten Durchlichtwertes nachgewiesen wird. Der Anteil an Streulich konnte entsprechend deutlich um 80 % gesenkt werden. Die optischen Eigenschaften wurden mit einem Zeiss System Photometer PM Q3 an 4 mm starken Prüfkörpern bestimmt.

## Patentansprüche

1. Verfahren zur Herstellung von kompakten, transparenten Polyisocyanat-Polyadditionsprodukten durch Umsetzung von (a) Isocyanaten mit (b) gegenüber Isocyanaten reaktiven Verbindungen gegebenenfalls in Gegenwart von (c) Katalysatoren, (d) Hilfs- und/oder Zusatzstoffen, dadurch gekennzeichnet, daß man die Umsetzung von (a) mit (b) in einer Form unter einem Druck von 1 bis 20 MPa durchführt.

2. Verfahren nach Anspruch 1, dadurch gekennzeichnet, daß man die Umsetzung bei einer Formtemperatur von 20 bis 220 °C durchführt.

3. Verfahren nach Anspruch 1, dadurch gekennzeichnet, daß man (i) (a) mit (b) in einer Form bei einer Formtemperatur von 20 bis 140 °C für eine Dauer von 0,5 bis 15 min umsetzt und anschließend (ii) das teilweise umgesetzte Produkt in der gleichen oder bevorzugt einer anderen Form bei einer Formtemperatur von 100 bis 220 °C unter einem Druck von 1 bis 20 MPa formgebend preßt.

4. Verfahren nach Anspruch 1, dadurch gekennzeichnet, daß man den Druck von 1 bis 20 MPa für eine Dauer von 0,5 bis 30 min aufrechterhält.

5. Verfahren nach Anspruch 1, dadurch gekennzeichnet, daß man als (b) gegenüber Isocyanaten reaktiven Verbindungen eine Mischung (I) einsetzt, die eine mittlere Funktionalität von ≥3 und eine mittlere Hydroxylzahl von 300 bis 950 mg KOH/g aufweist.

6. Verfahren nach Anspruch 5, dadurch gekennzeichnet, daß man als (b) eine Mischung verwendet, die folgende Komponenten enthält:
45 bis 99 Gew.-% einer Mischung (I) enthaltend mindestens ein Polyetherpolyalkohol, wobei die Mischung (I) eine mittlere Funktionalität von mindestens 3 und eine mittlere Hydroxylzahl von 650 bis 950 mg KOH/g aufweist,
1 bis 55 Gew.-% einer Mischung (II) enthaltend mindestens ein Polyesterpolyalkohol, wobei die Mischung (II) eine mittlere Funktionalität von 2 bis 3 und eine mittlere Hydroxylzahl von 20 bis 200 mg KOH/g aufweist.

7. Verfahren nach Anspruch 1, dadurch gekennzeichnet, daß man als (a) Isocyanate aliphatische und/oder cycloaliphatische Isocyanate einsetzt.

8. Verfahren nach Anspruch 1, dadurch gekennzeichnet, daß man die Umsetzung in der Form auf einem zu beschichtenden Material durchführt.

9. Kompakte, transparente Polyisocyanat-Polyadditionsprodukte erhältlich nach einem Verfahren gemäß Anspruch 1.

10. Kompakte, transparente Polyisocyanat-Polyadditionsprodukte erhältlich durch ein Verfahren gemäß Anspruch 1, die bei einer Dicke von 3 bis 5 mm eine Lichtdurchlässigkeit von mehr als 90 % und einen Streulichtanteil von weniger als 3 % aufweisen.

11. Materialien, die mit kompakten, transparenten Polyisocyanat-Polyadditionsprodukten gemäß Anspruch 9 oder 10 beschichtet sind.

12. Verwendung von kompakten, transparenten Polyisocyanat-Polyadditionsprodukten gemäß Anspruch 9 als Sonnendächer, Front-, Heck-, Seitenscheiben im Automobil- oder Flugzeugbau und/oder als Leuchtkörperabdeckungen.

13. Sonnendächer, Front-, Heck-, Seitenscheiben im Automobil- oder Flugzeugbau oder Leuchtkörperabdeckungen enthaltend kompakte, transparente Polyisocyanat-Polyadditionsprodukte gemäß Anspruch 9.
